# DEMANDE DE BREVET EUROPEEN

(11) **EP 3 210 822 A1**
(43) Date de publication de la demande: **30.08.2017**
(21) Numéro de dépôt: 16157466.0
(22) Date de dépôt: 25.02.2016
(51) Int. Cl.: B60N 2/28

(54) **DISPOSITIF D'ACCROCHAGE D'UN SIEGE DE VEHICULE SANS MOMENT DE ROTATION SUR LE CROCHET EN CAS DE COLLISION**

(71) Demandeur: Deville SA, 49150 Baugé en Anjou (FR)
(72) Inventeur: MASSE, Yann, 49150 BAUGE EN ANJOU (FR)
(74) Mandataire: Novagraaf Technologies

(57) **Abrégé**

La présente invention concerne un dispositif d'accrochage (1) d'un siège de véhicule comprenant :
- un support(3),
- un crochet (2) solidarisé au support par un axe pivot (4) autour duquel le crochet peut s'orienter entre des positions d'ouverture et de fermeture, le crochet pouvant être fermé pour retenir le siège,
- un premier élément de blocage (5) sur le crochet (2) et un deuxième élément de blocage (28) sur le support (3), l'axe pivot, le support et le crochet étant agencés de manière à éviter la formation d'un moment de rotation autour de l'axe pivot en cas d'un effort de traction sur le crochet, lorsque le crochet est en position de fermeture, lesdits éléments de blocage étant, en position de fermeture du crochet, en contact et alignés selon la direction de la traction.

## Description

La présente invention concerne un dispositif d'accrochage d'un siège de véhicule. Plus particulièrement, la présente invention concerne un dispositif d'accrochage, en particulier amovible, d'un siège automobile pour enfant au fauteuil d'un véhicule passager.

Par exemple, ce dispositif d'accrochage est une pince d'accrochage à un élément d'ancrage. Par exemple, le dispositif d'accrochage peut être une pince communément appelée ISOFIX ou LATCH.

Il est connu des dispositifs d'accrochage permettant d'assurer la fixation d'un siège dans le véhicule et agencés de manière à résister en cas de choc, en particulier frontal et latéral suivant les normes ECE R44 et ECE R129, à l'effort exercé sur les éléments d'ancrage du siège, de manière à empêcher le siège de se déplacer dans une direction donnée par rapport au véhicule. Notamment, il existe aujourd'hui des dispositifs d'accrochage répondant à la norme ISO 13216 (pour le véhicule), qui spécifie les dimensions, les exigences générales et les exigences de résistance statique des ancrages rigides destinés à fixer des systèmes de retenue pour enfants dans les véhicules.

Par exemple, il existe des pinces formées d'un crochet articulé dans un maillon, via un axe pivot, de manière à être apte à se refermer sur un élément d'ancrage situé au niveau des fauteuils d'un véhicule. Pour maintenir le crochet en position de fermeture, un verrou est agencé pour se glisser contre le crochet pour s'opposer à sa rotation vers sa position d'ouverture. Il s'agit en général d'une barre métallique actionnable en translation, de manière à pouvoir être déverrouillée pour enlever le siège de ses éléments d'ancrage si nécessaire. Cette barre présente souvent une longueur voisine de celle du maillon.

En cas de choc frontal, l'inertie du siège tend à faire déplacer ce dernier longitudinalement et vers l'avant par rapport au véhicule. Il en résulte un effort de traction vers l'arrière sur le crochet, qui génère un moment de rotation sur ce dernier. De ce fait, un effort important est généré sur le verrou. Pour éviter que la pince ne s'ouvre, le verrou doit donc avoir une résistance suffisante. Celui-ci est donc souvent réalisé en métal et d'une certaine épaisseur. Il en résulte un poids augmenté du siège.

Le problème technique que vise à résoudre l'invention est donc de permettre de diminuer le poids d'un siège avec un tel dispositif d'accrochage.

A cet effet, un objet de la présente invention est un dispositif d'accrochage d'un siège de véhicule, ledit dispositif d'accrochage comprenant :
- un support,
- un crochet solidarisé au support par un axe pivot autour duquel le crochet peut s'orienter par rapport au support entre une position d'ouverture et une position de fermeture, dans laquelle le crochet est apte à être fermé sur un élément de retenu du véhicule de manière à retenir le siège par rapport à un déplacement du siège selon une direction donnée,
- un premier et un deuxième éléments de blocage, le premier élément de blocage étant sur le crochet et fixe par rapport à ce dernier, le deuxième élément de blocage étant sur ledit support et fixe par rapport à ce dernier,
l'axe pivot, le support et le crochet étant agencés de manière à éviter la formation d'un moment de rotation autour de l'axe pivot en cas d'un effort de traction sur le crochet dans une direction de traction opposée à la direction donnée, lorsque le crochet est en position de fermeture, les éléments de blocage étant agencés de manière à ce qu'en position de fermeture du crochet les éléments de blocage soient en contact et sensiblement alignés selon la direction de traction.

Ainsi en cas de choc tendant à exercer une force d'inertie sur le siège selon la direction donnée, un effort de traction sera imprimé au crochet mais sans générer de moment de rotation sur le crochet autour de l'axe pivot. L'effort de traction sur le crochet en cas de collision sera ainsi transmis aux éléments de blocage, qui résisteront alors à l'effort de translation exercé sur le crochet.

Il n'est donc pas nécessaire d'avoir un verrou métallique avec une résistance élevée pour s'opposer au moment de rotation du crochet. On peut donc diminuer le poids du siège.

La présente invention permet donc de réduire le poids de siège au niveau du dispositif d'accrochage lui-même.

Par exemple, le verrou utilisé peut être un verrou en plastique. L'utilité de ce verrou sera simplement de maintenir le crochet en position de fermeture, lors de la circulation normale du véhicule.

L'effort imprimé au crochet générera un mouvement de translation. Les éléments de blocage forment des moyens de sécurisation du crochet en position de fermeture. En effet pour un choc d'une même intensité, la force est exercée seulement sur ces éléments de blocage qui s'opposent à la translation du crochet par rapport au support, et non sur une pièce s'opposant à la rotation du crochet.

Selon la force du choc, les éléments de blocage peuvent se déformer à cause de la translation. Par exemple lorsque le deuxième élément de blocage est un axe de butée serti dans le support et passant au travers d'un trou du crochet, cet axe de butée peut se tordre. Cependant dans ces cas, le crochet reste néanmoins fermé car il n'y a pas de rotation, protégeant ainsi la personne sur ce siège.

L'invention peut optionnellement présenter une ou plusieurs des caractéristiques suivantes :
- le dispositif d'accrochage est destiné à être agencé dans le véhicule de manière à ce que la direction donnée soit longitudinale et de l'arrière vers l'avant ; le dispositif d'accrochage présente ainsi une forte résistance à l'arrachage, en cas de choc frontal du véhicule équipé d'un siège comprenant ce dispositif d'accrochage ;
- le crochet présente un premier logement de l'axe pivot et le support présente un deuxième logement de l'axe pivot, l'axe pivot et ses premier et deuxième logements étant agencés de manière à ce qu'en position de fermeture, l'axe pivot soit, selon la direction de traction, distant des bords d'au moins l'un des logements; l'axe pivot est ainsi flottant dans l'un de ses logements selon la direction de traction ; l'effort n'est donc pas transmis à cet axe, évitant ainsi la génération d'un moment de rotation sur le crochet au niveau de l'axe pivot ; l'effort est ainsi directement transmis aux éléments de blocage ; c'est une manière simple de réaliser le dispositif d'accrochage selon l'objet de l'invention ;
- le premier logement et l'axe pivot sont de forme complémentaire, et le deuxième logement est un trou oblong présentant une longueur et une largeur, cette longueur s'étendant selon la direction de traction, l'axe pivot étant logé dans le trou oblong ; c'est un moyen simple de réaliser un agencement comme prévu à l'alinéa précédent ;
- l'axe pivot est fixé dans le premier logement, le crochet étant ainsi fixé par rapport à l'axe pivot ; notamment l'axe pivot peut être emmanché en force dans le premier logement ;
- le trou oblong a une largeur légèrement supérieure au diamètre de l'axe pivot ; il y a donc un jeu qui permet le glissement en translation de l'axe pivot dans le trou oblong selon la longueur de ce dernier, lorsque ce glissement n'est pas bloqué ;
- l'un des éléments de blocage est agencé de manière à entourer l'autre élément de blocage, et à être en contact de part et d'autre de ce dernier selon la direction de traction, lorsque le crochet est en position de fermeture ; un blocage ferme est ainsi assuré ;
- le deuxième élément de blocage est un axe de butée serti ou bouterollé dans le support, et le premier élément de blocage est un réceptacle formé dans le crochet, l'axe de butée étant logé dans le réceptacle ; c'est un moyen simple de réalisation du moyen de sécurisation formé par les éléments de blocages ; un axe est une forme très simple qui peut être assez courte, comparativement à un verrou sous forme de barre ; il est aussi résistant ; pour améliorer sa résistance à l'effort, l'axe de butée peut être agencé transversalement au crochet et au support ; le montage est également facilité car il est possible de sertir l'axe de butée une fois le crochet positionné par rapport au support ;
- alternativement à l'alinéa précédent, le deuxième élément de blocage est un réceptacle formé dans le support, le premier élément de blocage est un axe de butée positionné dans le crochet, et l'axe de butée est logé dans le réceptacle ; on a ainsi également un moyen simple de réalisation du moyen de sécurisation formé par les éléments de blocages ; la formation du crochet est simplifiée ;
- le réceptacle présente des bords formant un contour fermé, et ce contour présente un rétrécissement, une première portion et une deuxième portion, le rétrécissement délimitant un passage de l'une à l'autre de ces portions, la première portion formant une boucle ouverte débouchant dans la deuxième portion, le réceptacle étant agencé de manière à ce que l'axe de butée soit logé dans la première portion lorsque le crochet est en position de fermeture, à ce que l'axe de butée soit logé dans la deuxième portion lorsque le crochet est en position d'ouverture, et à ce que l'axe de butée passe d'une portion à l'autre par le rétrécissement lorsque le crochet passe de l'une à l'autre des positions de fermeture et d'ouverture ; ainsi le réceptacle forme également un double moyen de positionnement de l'axe de butée, selon les positions d'ouverture et de fermeture ;
- le rétrécissement est agencé de manière à être inférieur à celui de l'axe de butée ; cela permet de maintenir le crochet en position stable une fois dans l'une des positions d'ouverture ou de fermeture ; le passage de l'une à l'autre des portions se fait ainsi par clippage ;
- chacune desdites portions est une boucle ouverte formée par une portion de cercle dont le diamètre est ajusté à celui de l'axe de butée ;
- le réceptacle et ses portions sont orientées de manière à former une came, de manière à ce que lorsque le crochet pivote, le passage de l'une ou l'autre des portions du réceptacle autour de l'axe de butée, entraine également une translation du crochet et le déplacement de l'axe pivot le long de son deuxième logement, par exemple, de manière à ce que d'une part l'axe pivot s'écarte du milieu du deuxième logement lors du passage en position d'ouverture, par exemple en venant en contact avec un bord de ce deuxième logement, notamment un bord arrière, et d'autre part en se rapprochant du milieu de ce deuxième logement lors du passage en position de fermeture ;
- le dispositif d'accrochage comprend un moyen élastique agencé de manière à rappeler le crochet vers la position de fermeture ; cela permet une fermeture automatique du crochet et également forme un moyen de maintien en position de fermeture du crochet ;
- le dispositif d'accrochage comprend un verrou apte à évoluer entre une position de verrouillage et une position de déverrouillage et agencé de manière à ce qu'en position de verrouillage le verrou maintienne le crochet dans sa position de fermeture et le libère en passant en position de déverrouillage ; cela permet en utilisation normale d'assurer le maintien en position du crochet ; également cela évite une oscillation du crochet sur l'axe pivot ;
- le verrou est en matière plastique ; cela permet d'alléger le dispositif d'accrochage ; comme il n'y a pas de moment de rotation sur le crochet en cas de choc, ce verrou peut être en plastique ; de plus, on peut davantage alléger le verrou selon les réalisations comportant les éléments de blocage ;
- le verrou et le crochet sont reliés de manière à ce que lorsque le crochet passe en position de fermeture, le crochet présente un passage en vis-à-vis du verrou, permettant au verrou de se loger dans ce passage en position de verrouillage, et de manière à ce que lorsque le crochet passe en position de fermeture, le verrou entraine le crochet en position d'ouverture ; le déverrouillage permet ainsi d'ouvrir le crochet ; lorsque ce dernier est refermé le verrouillage se fait automatiquement ; l'accrochage amovible est simplifié ;
- le verrou est relié au crochet par le moyen élastique, le crochet, le verrou et le moyen élastique étant agencé de manière à ce que la contrainte de ce dernier augmente lorsque le verrou passe en position de déverrouillage ; le rappel en fermeture et le verrouillage sont ainsi liés ;
- le verrou comprend une portion de verrouillage et le crochet présente une découpe formant un passage dans lequel, lorsque le crochet passe en position de fermeture, la portion de verrouillage est apte à venir se loger, entre et en contact avec cette découpe et le support ;
- le crochet présente un bord d'appui dans le prolongement du passage, le crochet et le verrou étant agencés de manière à ce que le déplacement du verrou vers la position de déverrouillage entraine le déplacement de la portion de verrouillage hors du passage et le déplacement du crochet en rotation vers la position d'ouverture, de manière à ce que le bord d'appui vienne contre la portion de verrouillage ;
- le bord d'appui est arrondi ; cela facilite le mouvement du crochet et le glissement le long de la portion de verrouillage ;
- le crochet présente une butée venant contre le support lorsque le crochet est en position d'ouverture, ladite butée étant agencée de manière à bloquer le pivotement du crochet selon le sens d'ouverture ; cela permet de limiter la course du crochet lorsqu'on l'ouvre ;
- la butée est positionnée sur la périphérie du crochet entre la découpe et le bord d'appui ;
- la butée est formée par la jonction entre la découpe et le bord d'appui, notamment par une arrête ; cela permet une réalisation simple du crochet ;
- le support comporte un moyen de guidage du verrou, notamment un rail coopérant avec une rainure du verrou ; cela rend robuste l'enclenchement du verrou correctement dans le passage ;
- le support comprend deux parois latérales reliées par une paroi de fond, le support ayant une section en « U », et dans lequel le crochet est monté entre les deux parois latérales ; le support forme ainsi une pièce résistante ; le support peut être formé par une pièce emboutie ;
- l'axe de butée traverse le crochet et présente une première et une deuxième extrémités logées respectivement dans l'une et dans l'autre des branches du « U » ; cela permet un montage simple du crochet ;
- le support et le crochet présentent chacun une encoche apte à recevoir et à loger l'élément de retenue du véhicule, chaque encoche formant une boucle ouverte, le crochet et le support étant agencés de manière à ce qu'en position d'ouverture, les boucles s'ouvrent dans une zone commune de manière à ce que les deux encoches soient libres d'accès par l'élément de retenue, et à ce qu'en position de fermeture, les ouvertures des boucles soient décalées et définissent ensemble un contour fermé ;
- le crochet présente une portion d'actionnement agencée de manière à ce qu'en position de fermeture, l'enfoncement d'un élément de retenue dans l'encoche, entraine l'appui de l'élément de retenue sur la portion d'actionnement, entraînant ainsi la rotation du crochet vers sa position de fermeture ; cela permet la fermeture du crochet sur l'élément de retenue, dès enfoncement au fond de l'encoche ;

Sauf indication contraire, les termes « avant », « arrière », « inférieur », « supérieur », « côté », « longitudinal », « transversal » se réfèrent par rapport à l'orientation dans laquelle est destinée à être montée le dispositif d'accrochage dans le véhicule.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue en perspective sur le côté et d'arrière en avant par rapport au véhicule ;
- la figure 2 est une vue éclatée en perspective d'un dispositif d'accrochage selon l'invention ;
- la figure 3 est une vue en perspective des éléments de la figure 2 une fois assemblés ;
- la figure 4 est une vue latérale de la figure trois mais avec le crochet en position d'ouverture ;
- la figure 5 est une vue latérale correspondant à la figure 4 mais avec le crochet en position de fermeture.

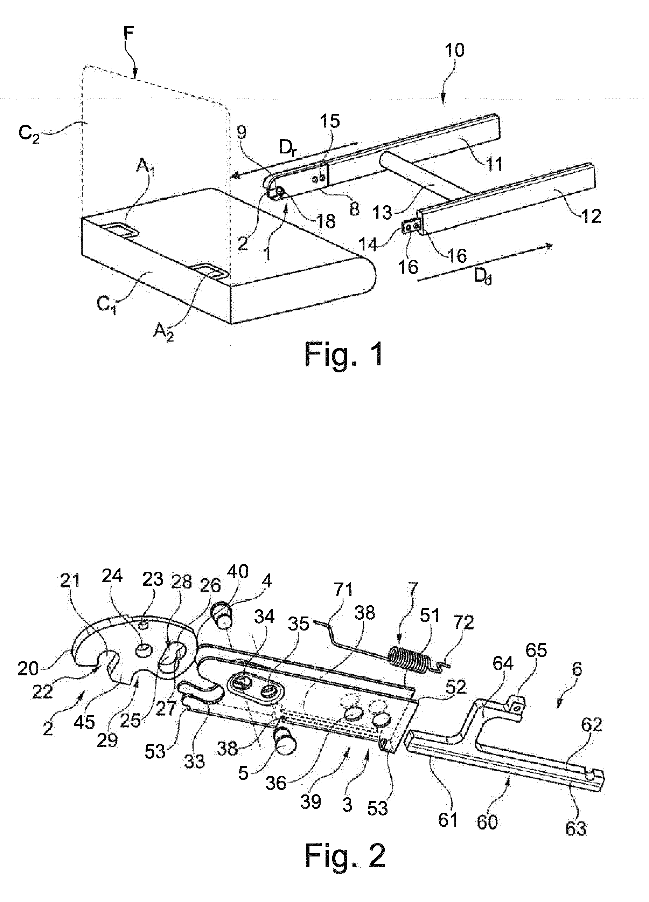

La figure 1 représente un exemple de système d'accrochage 10 d'un siège de véhicules selon l'invention. Il s'agit d'un siège pour enfant, le système d'accrochage 10 étant un système de retenue pour enfants. Pour des raisons de clarté, l'assise de ce siège pour enfant n'a pas été représentée, seul le système de retenue 10 étant représenté.

Ce système de retenue 10 comprend deux barres d'accrochage 11, 12, parallèles entre elles. Ces barres d'accrochage 11, 12 sont séparées et peuvent éventuellement être fixées entre elles par une traverse 13. Le système de retenue 10 est fixé sous le siège pour enfant (non représenté).

A l'extrémité de chaque barre d'accrochage 11, 12, est fixé un exemple de dispositif d'accrochage 1 selon l'invention. Sur la figure 1, seul le dispositif d'accrochage 1 monté sur la première barre d'accrochage 11 est visible.

À l'arrière des barres d'accrochage 11, 12, est disposé une patte de fixation 14. En figure 1, seule la patte de fixation 14 de la deuxième barre d'accrochage 12 est visible. La patte de fixation 14 comprend des moyens de fixation, dans cet exemple des trous de fixation 16, pour y fixer le dispositif d'accrochage 1 correspondant.

Le siège pour enfant est destiné à être posé et fixés sur un fauteuil F du véhicule, par exemple un fauteuil passager arrière. Pour cela, le fauteuil F comprend, entre le bas du dossier C₂ et l'arrière du coussin d'assise C₁, des éléments de retenue, qui forment dans cet exemple des amarres A₁ et A₂. Les barres d'accrochage 11, 12 sont destinées à être fixées à ces amarres A₁, A₂, par l'intermédiaire du dispositif d'accrochage 1 correspondant.

Pour cela, chacun des dispositifs d'accrochage 1 comprend un crochet 2 mobile entre une position une position de fermeture et une position d'ouverture, dans laquelle logement de retenue 9 dans le dispositif d'accrochage 1 est dégagée.

Un fourreau 8 forme l'enveloppe externe du dispositif d'accrochage 1 et recouvre le mécanisme d'accrochage permettant les déplacements du crochet 2 d'une position à une autre. Ce mécanisme sera détaillé plus loin.

Lorsque le crochet 2 est en position d'ouverture, le siège pour enfant peut être posé sur le coussin C₂, puis déplacé longitudinalement vers l'arrière du véhicule, jusqu'à ce que les amarres A₁, A₂, s'engagent dans le logement de retenue 9 correspondants. Lorsque les amarres A₁, A₂ atteignent le fond du logement de retenue, elles déclenchent la fermeture du crochet 2, qui se referme à l'arrière de ces amarres A₁, A₂, les emprisonnant ainsi dans le logement de retenue 9. Le siège pour enfant est ainsi fixé sur le fauteuil F.

En cas de freinage ou de collision frontale du véhicule, le siège pour enfant et donc le système de retenue 10 reste immobile compte tenu de sa fixation aux amarres A₁, A₂. Cela permet d'éviter un déplacement du siège pour enfant selon une direction donnée D_{d}, ici longitudinale de l'arrière vers l'avant.

Il en résulte que dans un tel cas, chaque crochet 2 étant bloqué par l'amarre correspondante A₁, A₂, une traction sur ce crochet 2 selon une direction de traction Dₜ opposée à la direction donnée D_{d}.

Une telle traction est particulièrement élevée et le mécanisme d'accrochage permet de résister à cette traction pour assurer la protection de l'enfant assis sur ce siège.

Les éléments de ce mécanisme apparaissent en figure 2. Dans cet exemple, il comprend le crochet 2, le support 3 de ce crochet, des axes 4 et 5, solidarisant le crochet 2 à son support 3, un verrou 6 et un moyen élastique 7.

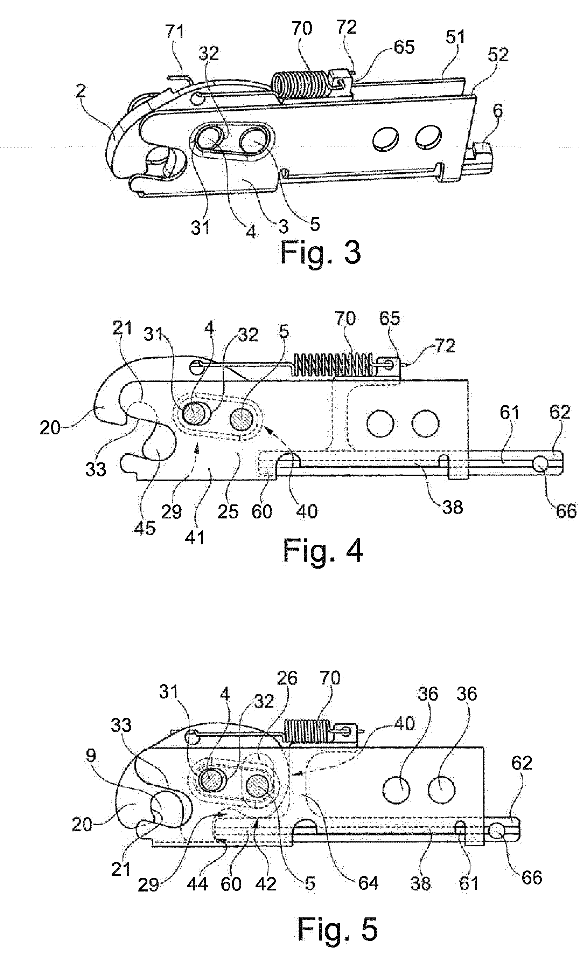

La figure 3 illustre ces éléments, une fois assemblés. Le fourreau 8 n'est pas représenté pour des raisons de clarté.

Le crochet 2 comprend un trou traversant circulaire formant un premier logement 24 de l'un des axes, à savoir l'axe pivot 4, qui traverse de part en part ce premier logement 24. L'axe pivot 4 pouvant être emmanché en force dans ce premier logement 24, de manière à être fixe dans ce logement 24.

Dans cet exemple, le support forme un maillon 3, reliant le crochet 2 aux barres d'accrochage 11, 12. Pour cela, le maillon 3 comprend à l'avant des trous de fixation 36, destinés à venir en vis-à-vis des trous de fixation 16 de la patte de fixation 14 correspondante et de trous de fixation 15 du fourreau 8 (visibles sur la figure 1). Le maillon 3, les pattes de fixation 14 et le fourreau 8 étant solidarisés par des éléments de fixation comprenant des tiges traversant ces trous, notamment des vis avec ou sans écrous.

D'une manière générale, et notamment dans cet exemple, le maillon 3 peut être formé par une pièce pliée de manière à former deux parois latérales 51, 52 reliées entre elles par une paroi de fond 53. En section, le maillon 3 présente des sections en « U », les branches latérales du « U » étant formées par les sections des parois latérales 51, 52, et la barre inférieure du « U » étant formée par la section de la paroi de fond 53.

Le maillon 3 peut présenter également des découpes permettant de former :
- à l'avant une encoche 33 à l'arrière de chacune des parois latérales 51, 52,
- une fenêtre 39 sur la paroi de fond 53 délimitée latéralement par deux rails de guidage 38, qui peuvent par exemple être formés par un repliement des parois latérales 51, 52, vers l'intérieur du maillon 3 au niveau de cette fenêtre 39,
- les trous de fixation 36 du maillon,
- un deuxième logement 34 de l'axe pivot 4, chaque paroi latérale 51, 52, comprenant un deuxième logement 34 de l'axe pivot,
- un trou de sertissage 35 au travers de chaque paroi latérale 51, 52.

Le crochet 2 présente une forme adaptée pour être logé entre les deux parois latérales 51, 52, du maillon 3. Par exemple, le crochet 2 est formé par une pièce plate.

Les différentes parties du crochet 2 peuvent être formées par ses bords et par des trous traversants. C'est donc une pièce simple à réaliser.

L'axe pivot 4 traverse également chacun des deuxièmes logements 34. Chacun des deuxièmes logements de l'axe pivot 4 est formé par un trou oblong 34 dont la longueur s'étend sur une direction parallèle à la direction de traction Dₜ, par exemple une direction environ horizontale lorsque le siège est monté sur le fauteuil F.

La largeur de ce deuxième logement 34 correspond au diamètre de l'axe pivot 4 de manière à ce que celui-ci soit immobilisé selon une direction verticale.

Cependant compte tenu de l'orientation de la longueur des trous oblongs 34, cet axe pivot 4 peut se déplacer d'avant en arrière. Cet axe pivot 4 forme donc un axe flottant.

Lorsque le crochet est monté en position de fermeture dans le maillon trois, comme on peut le voir en figures 3 et 5, l'axe pivot 4 est à distance du bord arrière 31 et du bord avant 32 des trous oblongs. En revanche, il est en contact avec les bords supérieurs et inférieurs des trous oblongs 34. Il s'ensuit qu'en cas de traction sur le crochet 2 dans la direction de traction Dₜ, aucun mouvement de rotation ne sera transmis à cet axe pivot 4.

L'axe pivot 4 peut néanmoins pivoter autour de son axe longitudinal. Le crochet 2 reste mobile autour de cet axe pivot 4 entre la position d'ouverture, représentée en figure 4 et la position de fermeture, représentée en figures 3 5.

Le crochet 2 comprend un doigt 20, courbé vers le bas, dont le bord convexe forme l'arrière du crochet 2. Le crochet 2 comprend une encoche 21 qui formée entre le bord concave du doigt 20 et le reste du crochet. Cette encoche 21 forme une boucle dont l'ouverture correspond à l'ouverture du crochet 22, lorsque le crochet est en position d'ouverturₑ.

Dans la position d'ouverture, l'ouverture 22 du crochet est accessible aux ancrages A₁, A₂.

Les encoches 33 du maillon sont orientées également avec leur ouverture vers l'arrière, de sorte que le doigt 20 dégage l'accès à ces encoches 33 en position d'ouverture. Plus particulièrement, les boucles formées par les encoches 33 du maillon et celles formées par les encoches 21 du crochet présente des ouvertures qui sont chacune globalement orientées de manière à ce que les amarres A₁, A₂, puissent accéder à l'intérieur de ces encoches 21, 33.

Le fourreau 8 comprend également une encoche 18 sur chacune de ses parois latérales. Ces encoches 18 sont orientées de la même manière que les encoches 33 du maillon 3 pour permettre l'accès aux amarres A₁, A₂, à la fois dans l'encoche 21 du crochet 2 et dans les encoches 33 du maillon, en position d'ouverture.

L'encoche 21 sépare le doigt 20 d'une portion d'actionnement 45. Dans l'exemple représenté en figure 4, lorsque le crochet 2 est en position d'ouverture, celui-ci est basculé vers l'arrière, et la portion d'actionnement 45 est saillante à l'intérieur du logement de retenue 9. Ainsi lorsque les amarres A₁, A₂, glissent à l'intérieur des encoches 33 vers l'avant, elles atteignent cette portion d'actionnement 45, puis appuient dessus, entraînant le basculement du crochet 2 autour de l'axe pivot 4. Le crochet 2 se referme alors à l'arrière des amarres A₁, A₂.

Une fois le crochet 2 en position de fermeture, les boucles formées par l'encoche 21 du crochet 2 et par les encoches 33 du maillon 3 sont agencées de manière à ce que leurs ouvertures soient décalées entre elles et sans se superposer. Ainsi, les bords de ces boucles forment un contour fermé. En d'autres termes, le doigt 20 ferme l'entrée des encoches 33 du maillon 3, et donc du logement de retenue 29. L'ancrage correspondant A₁, A₂ est ainsi emprisonné et fermement maintenu par la pince formée par le doigt 20 et les encoches 33 du maillon 3.

Le maillon 3 et le crochet 2 comprennent également des éléments de blocage 5, 28 alignés selon la direction de traction Dₜ, de manière à former des butées complémentaires, pour qu'en cas de traction selon la direction de traction Dₜ sur le crochet, l'effort généré soit reporté sur ces éléments de blocage.

Dans cet exemple, le premier élément de blocage est formé par l'axe de butée 5, et le deuxième élément de blocage est formé par un réceptacle 28, ici formé par un trou traversant dans le crochet.

L'axe de butée 5 traverse la deuxième paroi latérale 52 du maillon 3, le réceptacle 28 puis le trou de sertissage 35 de la première paroi latérale 51. L'axe de butée 5 est serti ou bouterollé à l'intérieur des trous de sertissage 35. En revanche, il présente un jeu à l'intérieur du réceptacle 28, de sorte que le crochet 2, en particulier les bords du réceptacle 28, peuvent bouger autour de cet axe de butée 5.

Le réceptacle 28 comprend deux portions, à savoir une première portion 25 et une deuxième portion 26. Les bords du réceptacle 28 forment un contour fermé, présentant un rétrécissement 27, environ en son milieu. Les deux portions 25, 26, sont alignées suivant la longueur du réceptacle, le rétrécissement délimitant le passage de l'une à l'autre de ces portions.

Ce réceptacle 28, le crochet 2 et le maillon 3 sont agencés de manière à ce qu'en position de fermeture, l'axe de butée 5 soit logé dans la première portion 25 du réceptacle 28, et de manière à ce qu'en position d'ouverture, cet axe de butée 5 soit logé dans la deuxième portion 26 de ce réceptacle 28.

Ainsi en cas de choc frontal, la traction exercée sur le doigt 20 ne générera pas de moment de rotation autour de l'axe pivot 4, celui-ci étend distant des bords arrière 31 et avant 32 des deuxièmes logements 34 de l'axe pivot 4, mais un effort en translation selon la direction Dₜ, cet effort de translation se reportant directement sur l'axe de butée 5. Ce dernier étant en contact avec le bord avant de la première portion 25 du réceptacle 28, c'est l'axe de butée 5 qui supportera l'effort de traction.

L'axe de butée 5 est par exemple transversal par rapport aux parois latérales 51, 52 du maillon 3 et également par rapport à la pièce formant le crochet 2. L'axe de butée 5 peut de plus être formé par un goujon court. Il est ici serti dans les parois latérales 51, 52 du maillon 3. La résistance à la traction de la l'axe de butée 5 est donc très forte.

De même, le bord du réceptacle 28 peut être formé par un simple trou traversant à l'intérieur d'une pièce métallique formant le crochet 2. Cela renforce davantage la résistance du dispositif d'ancrage 1 à l'ouverture.

Le rétrécissement 27 a un diamètre légèrement plus petit que celui de l'axe de butée 5. Ainsi, un crantage sera marqué entre la position de fermeture et la position d'ouverture du crochet 2.

Dans l'exemple illustré, le dispositif d'accrochage 1 comprend un verrou 6 agencé de manière à pouvoir verrouiller le crochet en position de fermeture.

Par exemple, le verrou 6 comprend une barre longitudinale 60, comprenant une portion de verrouillage 61 et une portion principale 62 situées respectivement à l'arrière et à l'avant du verrou 6.

Depuis cette barre principale 60, entre la portion de verrouillage 61 la portion principale 62, s'étend une portion verticale d'une partie en « L » 64. Une portion horizontale de cette partie en « L » porte une patte de liaison 65 comprenant un orifice à l'intérieur duquel peut se loger une extrémité d'un moyen élastique 7.

Le crochet 2 comprend un passage 29 formé par la découpe du bord du crochet en bas de celui-ci et en avant de celui-ci. Comment on peut le voir en figure 5, ce passage 29 est agencé de manière à être accessible au verrou 6 en translation vers l'arrière, lorsque le crochet 2 est en position de fermeture.

Afin de guider la portion de verrouillage 61 dans ce passage 29, ce verrou 6, la barre principale 60 comprend, notamment sur toute sa longueur, deux rainures latérales 63.

Les rails de guidage 38 sont respectivement logés dans ces rainures latérales 63, de manière à ce que ces dernières puissent coulisser le long des rails de guidage 38.

Lorsque le verrou 6 passe de sa position de déverrouillage à sa position de verrouillage, la portion de verrouillage 61 vient se loger dans le passage 29, entre la paroi de fond 53 et premier méplat 42, formés dans le passage 29 sur un bord inférieur du crochet 2. Par exemple, en position de fermeture, la distance entre le premier méplat 42 et la paroi de fond 53 correspond à la hauteur de la portion de verrouillage 61. Cela permet de prévenir, en position de verrouillage, l'oscillation du crochet. Pour améliorer cette immobilisation, la portion de verrouillage peut comprendre une face supérieure plate.

La longueur du passage 29 est agencée de manière à ce que la portion de verrouillage 61, notamment une face supérieure de celle-ci, vienne en butée contre un deuxième plat 44 vertical et orienté en vis-à-vis du verrou 6, soit vers l'avant dans cet exemple. La barre principale 60 vient ainsi en appui contre ce deuxième méplat 44.

Grâce à ces deux méplats 41, 42, on a donc un blocage du crochet selon deux directions orthogonales, ici la direction verticale et la direction parallèle à la direction de traction Dₜ.

Le crochet 2 est ainsi maintenu en position par le verrou 6.

Étant donné que, comme expliqué précédemment, en cas de choc frontal, il n'y aura pas de moment de rotation formé sur l'axe pivot 4, il n'y aura pas d'effort généré sur le verrou 6. Ce verrou 6 n'a donc pas besoin d'être aussi résistant que les verrous de l'art antérieur.

En particulier, le verrou 6 peut être réalisé en plastique. La barre principale ne nécessite pas non plus une épaisseur très élevée.

Selon des réalisations applicables tant à l'invention qu'à cet exemple, la face supérieure de la portion de verrouillage 61 est plane et parallèle à la direction de traction Dₜ. De même, le premier méplat 42 présente également une surface plane parallèle à la face supérieure de la portion de verrouillage 61. Il s'ensuit donc qu'en cas de traction sur le doigt 20 selon la direction Dₜ, aucun effort de traction ne peut être transféré au verrou 6.

Le crochet 2 et le verrou 6 sont également reliés par le moyen élastique 7, de manière à réaliser une fonction de rappel du crochet 2 vers sa position de fermeture. Ce moyen élastique est dans cet exemple un ressort 7 à spires, dont l'ensemble de spires 70 travaille en extension.

Dans cet exemple, le ressort 7 est formé par une tige dont l'enroulement forme les spires en partie intermédiaire de la tige.

La tige présente une première extrémité 71 passant au travers d'un orifice 23 du crochet 2 et une deuxième extrémité 72 passant au travers de l'orifice de la patte de liaison 65.

Dans cet exemple, ces extrémités 71 et 72 forment chacune deux angles successifs de 90°, facilitant ainsi leur insertion à l'intérieur des orifices correspondants.

Lorsqu'on tire le verrou 6 vers l'avant, le ressort entraîne le basculement du crochet 2 vers l'avant. Dans cet exemple, l'orifice 23 du crochet est situé au-dessus de l'axe pivot 4, légèrement en avant en position de fermeture.

Afin de limiter la course du crochet 2 vers l'arrière, le crochet 2 comprend une butée 41 qui vient s'appuyer contre la paroi de fond 53.

Dans cet exemple, cette butée est réalisée de manière simple par les bords du crochet. Notamment, la butée 41 est formée par une arrête formée par la jonction du premier méplat 42 et un bord arrondi 40, qui s'étend vers le haut depuis cette arête 41.

Le verrou 6, notamment sa partie en « L » 64, est agencé de manière à ce que, lorsque l'extrémité de la portion de verrouillage 61 est en contact avec le deuxième méplat 44, le bord arrondi 40 est en contact avec la partie en « L » 64, en particulier avec la portion verticale de cette dernière.

Le fonctionnement du mécanisme d'accrochage est expliqué ci-après.

En position de fermeture du crochet 2, le verrou 6 est rapproché du crochet 2 et quasiment intégralement rétracté à l'intérieur du maillon 3. La portion de verrouillage est logée à l'intérieur du passage 29 et la portion en « L » 64 est en appui contre le bord arrondi 40. Le ressort est à son état de contrainte minimale.

Comme expliqué précédemment, dans cette position de fermeture l'oscillation du crochet 2 est empêchée par le verrou 6. Egalement en cas de collision, c'est l'axe de butée 5 qui supporte l'effort généré pour retenir le siège et éviter un déplacement de ce dernier vers l'avant.

Pour passer le verrou 6 en position de déverrouillage et déverrouiller le dispositif d'accrochage 1, on exerce une traction vers l'avant du verrou 6, par exemple au moyen d'une manette (non représentée). Cette manette peut être accessible sur une barre d'accrochage 11, 12, et solidarisée à la portion principale 62 par un orifice de déverrouillage 66, notamment présent à l'extrémité de la portion principale 62. Cette dernière est notamment agencée à l'intérieur de la barre d'accrochage correspondante 11, 12, et libre en translation à l'intérieur de celle-ci.

Il s'ensuit que le verrou 6 s'écarte du crochet 2, et ce faisant entraîne l'extension du ressort 7. Le ressort 7 tend ainsi à rappeler le verrou 6 vers sa position de verrouillage et le crochet 2 vers sa position de fermeture.

Ce faisant, le verrou va se retirer du passage 29. Une fois que la portion de verrouillage 61 est sortie du passage 29, c'est-à-dire qu'elle a passé le premier méplat 42 et l'arête 41, le crochet 2 n'étant plus en appui sur la portion de verrouillage 61, il va pouvoir basculer. Le bord arrondi 40 passe alors devant la portion de verrouillage 61. Il facilite alors la rotation du crochet 2 contre l'arrière de la portion de verrouillage 61. Le crochet 2 va ainsi tourner en frottant contre cette portion de verrouillage 61, jusqu'à ce que l'arête 41 vienne en butée contre la paroi de fond 53. À cet instant le crochet atteint sa position de fermeture.

Le ressort 7 exerçant une force de rappel tendant à rapprocher le crochet 2 et le verrou 6 l'un vers l'autre, la portion de verrouillage 61 se retrouve en butée contre le bord arrondi 40 et de ce fait le crochet 2 est maintenu bloqué en position de fermeture. Le bord arrondi 40 forme ainsi un bord d'appui de la portion de verrouillage 61.

L'utilisateur peut ainsi facilement, sans maintenir une manette ou un actionneur, prendre son temps pour positionner le siège pour enfant et le fixer.

Par ailleurs selon une réalisation de l'invention, et comme illustré dans cet exemple, le réceptacle 28 est orienté dans le crochet de manière à ce que la première portion 25 du réceptacle 28 soit plus proche du centre du premier logement 24 de l'axe pivot que ne l'est la deuxième portion 25 du réceptacle. C'est une manière de réaliser les bords du réceptacle 28 de manière à ce qu'ils forment un chemin de came permettant la translation de l'axe pivot 4 vers l'arrière lors du passage en position d'ouverture, faisant ainsi saillir davantage la portion d'actionnement 45 à l'intérieur de l'encoche 33 du maillon.

Par exemple, chacune de ces première et deuxième portions 25, 26, a une forme en partie circulaire, dites première et deuxième formes de logement, dans laquelle se loge l'axe de butée 5 selon que le crochet est en position d'ouverture ou de fermeture. Chaque forme de logement correspond donc à un arc de cercle. La distance entre le centre du cercle de la première forme de logement et le centre dudit premier logement 24 est égale à la distance entre le centre du trou de sertissage 35 et le centre du trou oblong 34. En revanche, la distance entre le centre du cercle de la deuxième forme de logement et le centre dudit premier logement 24 est égale à la distance entre le centre du trou de sertissage 35 et un point situé en arrière du centre du trou oblong 34, par exemple un point dont la distance au bord arrière 31 du trou oblong 35 est égale au rayon de la section transversale de l'axe pivot 4.

Lorsque les encoches 21, 33, 18, sont glissées autour des amarres A₁ et A₂, ces dernières glissent à l'intérieur des encoches et actionne la portion d'actionnement 45, qui recule alors vers le fond de l'encoche 33 du maillon 3. Le crochet 2 bascule ainsi vers l'arrière et le doigt 20 se rabat à l'arrière des ancrages A₁, A₂. Au cours de ce mouvement du crochet 2 vers sa position de fermeture, le bord arrondi 40 remonte et glisse contre la portion de verrouillage 61 jusqu'à ce que l'arête 41 passe au-dessus de la portion de verrouillage 61. A moment-là, le passage 29 est libre d'accès. La portion de verrouillage 61, sous l'effet du rappel par le ressort 7, s'enclenche alors complètement dans le passage 29 jusqu'au deuxième méplat 44. Le crochet a ainsi atteint sa position de fermeture.

Dans l'exemple illustré, en raison de l'orientation du réceptacle 28 précédemment décrite, le passage de la première portion 25 du réceptacle 28 autour de l'axe de butée 5 entraine également le recul du crochet. Cela aide à l'enfoncement correct de l'amarre A₁, A₂, au fond du logement de retenue. L'axe pivot 4 se positionne également au centre du trou oblong 34, à distance des bords arrière et avant de ce dernier.

Dans l'exemple de réalisation illustré, pour réaliser le montage du dispositif d'accrochage, on monte d'abord le verrou 6 dans le maillon 3, en engageant le verrou 6 par l'avant du maillon et en insérant les rails de guidage 38 dans les rainures 63 correspondantes. Ensuite, on relie la patte de liaison 65 à l'orifice 23 du crochet par le ressort 7. Ensuite, le crochet est placé par le haut entre les parois latérales 51, 52 du maillon 3.

La réalisation en forme de plaque du crochet 2 facilite son montage par simple insertion et glissement entre les parois latérales 51, 52. Le dispositif d'accrochage 1 présente néanmoins un jeu entre les côtés du crochet 2 et ces parois latérales du maillon 3, pour pouvoir pivoter sans frottement.

Le crochet 2 est monté en position de fermeture, la portion de verrouillage 61 étant agencée dans le passage 29 du crochet. On positionne le verrou 6 de manière à ce que le premier logement 24 de l'axe pivot 4 et le réceptacle 28 soient en vis-à-vis respectivement des trous oblongs 34 et des trous de sertissage 35.

Ensuite, on enfonce l'axe pivot 4 et l'axe de butée 5 au travers d'une des parois latérales 51, 52, du maillon 3, puis au travers du crochet 2, puis au travers de l'autre des parois latérales 51, 52. L'axe de butée 5 est ensuite serti ou agencé pour former une bouterolle.

Dans cet exemple, l'axe pivot 4 est inséré depuis un côté du maillon et l'axe de butée 5 depuis l'autre côté du maillon. On pourrait néanmoins insérer ces deux axes du même côté.

L'axe pivot 4 peut comprendre une gorge circulaire, le diamètre de l'axe pivot en dehors de la gorge étant légèrement supérieur à la largeur du trou oblong 34, et le diamètre de l'axe pivot en dehors de cette gorge étant supérieur à la largeur du trou oblong 34. La largeur de la gorge correspond environ à celle de la paroi latérale correspondante pour permettre le coulissement de l'axe pivot 4 dans le trou oblong 34. L'axe pivot 4 peut ainsi être inséré en force entre les bords supérieurs et inférieurs du trou oblong 34, jusqu'à ce que ces bords se logent dans la gorge.

Le mécanisme est ainsi assemblé.

Ensuite le fourreau 8 est enfilé sur l'ensemble à partir de l'arrière du crochet 2, de sorte que les encoches 18 du fourreau 8 correspondent avec les encoches 33 du maillon 3. Le dispositif d'accrochage 1 peut ensuite être monté sur les pattes de fixation 14 de chacune des barres d'accrochage 11, 12.

Dans cet exemple, de manière non limitative, le fourreau à une longueur de 85 millimètres (mm), une hauteur de 33 mm et une largeur de 12,5mm. Les trous de fixation du maillon 3 et du fourreau 8, respectivement 36 et 15, ont un diamètre de 6 mm.

## Revendications

1. Dispositif d'accrochage (1) d'un siège de véhicule, ledit dispositif d'accrochage comprenant :
- un support(3),
- un crochet (2) solidarisé au support par un axe pivot (4) autour duquel le crochet peut s'orienter par rapport audit support entre une position d'ouverture et une position de fermeture, dans laquelle le crochet est apte à être fermé sur un élément de retenu (A₁, A₂) du véhicule de manière à retenir le siège par rapport à un déplacement du siège selon une direction donnée (D_{d}),
- un premier et un deuxième éléments de blocage, le premier élément de blocage (5) étant sur le crochet (2) et fixe par rapport à ce dernier, le deuxième élément de blocage (28) étant sur ledit support (3) et fixe par rapport à ce dernier,
l'axe pivot, ledit support et le crochet étant agencés de manière à éviter la formation d'un moment de rotation autour de l'axe pivot en cas d'un effort de traction sur le crochet dans une direction de traction (Dₜ) opposée à la direction donnée, lorsque le crochet est en position de fermeture, lesdits éléments de blocage étant agencés de manière à ce qu'en position de fermeture du crochet lesdits éléments de blocage soient en contact et sensiblement alignés selon la direction de traction (Dₜ).

2. Dispositif d'accrochage (1) selon la revendication 1, dans lequel le crochet (2) présente un premier logement (24) de l'axe pivot (4) et ledit support (3) présente un deuxième logement (34) de l'axe pivot, l'axe pivot et ses premier et deuxième logements (24, 34) étant agencés de manière à ce qu'en position de fermeture l'axe pivot soit, selon la direction de traction, distant des bords (31, 32) d'au moins l'un des logements.

3. Dispositif d'accrochage (1) selon la revendication 2, dans lequel le premier logement (24) et l'axe pivot (4) sont de forme complémentaire, et dans lequel le deuxième logement est un trou oblong (34) présentant une longueur et une largeur, cette longueur s'étendant selon ladite direction de traction (Dₜ), l'axe pivot étant logé dans ledit trou oblong.

4. Dispositif d'accrochage (1) selon l'une quelconque des revendications précédentes, dans lequel l'un des éléments de blocage (28) est agencé de manière à entourer l'autre élément de blocage (5), et à être en contact de part et d'autre de ce dernier selon la direction de traction (Dₜ), lorsque le crochet est en position de fermeture.

5. Dispositif d'accrochage (1) selon l'une quelconque des revendications précédentes, dans lequel le deuxième élément de blocage est un axe de butée (5) serti ou bouterollé dans le support (3), et dans lequel le premier élément de blocage est un réceptacle (28) formé dans le crochet, l'axe de butée étant logé dans le réceptacle.

6. Dispositif d'accrochage (1) selon la revendication 5, dans lequel le réceptacle (28) présente des bords formant un contour fermé, et dans lequel ledit contour présente un rétrécissement (27), une première portion (25) et une deuxième portion (26), le rétrécissement délimitant un passage de l'une à l'autre de ces portions, la première portion formant une boucle ouverte débouchant dans la deuxième portion, le réceptacle étant agencé de manière à ce que l'axe de butée soit logé dans la première portion lorsque le crochet est en position de fermeture, à ce que l'axe de butée soit logé dans la deuxième portion lorsque le crochet est en position d'ouverture, et à ce que l'axe de butée passe d'une portion à l'autre par ledit rétrécissement lorsque le crochet passe de l'une à l'autre des positions de fermeture et d'ouverture.

7. Dispositif d'accrochage (1) selon l'une quelconque des revendications précédentes, comprenant un moyen élastique (7) agencé de manière à rappeler le crochet (2) vers la position de fermeture.

8. Dispositif d'accrochage (1) selon l'une quelconque des revendications précédentes, comprenant un verrou (6) apte à évoluer entre une position de verrouillage et une position de déverrouillage et agencé de manière à ce qu'en position de verrouillage le verrou maintienne le crochet (2) dans sa position de fermeture et le libère en passant en position de déverrouillage.

9. Dispositif d'accrochage selon la revendication 8, dans lequel le verrou (6) est en matière plastique.

10. Dispositif d'accrochage (1) selon l'une quelconque des revendications précédentes, dans lequel le support (3) comprend deux parois latérales (31, 32) reliées par une paroi de fond (33), le support ayant une section en « U », et dans lequel le crochet (2) est monté entre les deux parois latérales (31, 32).

11. Dispositif d'accrochage selon la revendication 10, dans lequel l'axe de butée (5) traverse le crochet (2) et présente une première et une deuxième extrémités logées respectivement dans l'une et dans l'autre des parois latérales (31, 32).
